# EUROPEAN PATENT SPECIFICATION

(11) **EP 1 100 648 B1**
(45) Date of publication and mention of the grant of the patent: **17.09.2003**
(21) Application number: 99934888.1
(22) Date of filing: 20.07.1999
(51) Int. Cl.: B23P 11/00, B21D 39/20, B21D 53/88, B62D 25/14

(54) **AN APPARATUS FOR SECURING COMPONENTS UPON A STRUCTURAL MEMBER**
VORRICHTUNG ZUR BEFESTIGUNG VON TEILEN AUF STRUKTURELEMENTEN
DISPOSITIF DE FIXATION DE COMPOSANTS SUR UN ELEMENT STRUCTUREL

(30) Priority: 30.07.1998 GB 9816570
(43) Date of publication of application: 23.05.2001
(73) Proprietor: Bayerische Motorenwerke AG, 80788 München (DE)
(72) Inventor: MELLOR, Michael, Coleshill, Birmingham B46 3EX (GB); PITCHFORD, Neil John, Warwick CV34 4JD (GB)
(86) International application number: GB9902333
(87) International publication number: WO00006337

(56) References cited:
- DE-A- 3 203 144
- DE-A- 19 618 626
- DE-C- 3 720 487
- DE-C- 19 548 341
- US-A- 4 159 564
- US-A- 4 724 693
- US-A- 5 557 840
- US-A- 5 752 311

## Description

This invention relates to an apparatus for securing components upon a structural member and in particular to a beam for use in a motor vehicle.

It is known to provide a transverse beam for a motor vehicle extending from one side of the motor vehicle to the other side of the motor vehicle behind a dashboard of the motor vehicle in order to support an airbag housing for a passenger of the motor vehicle. The transverse beam acting as a structural member able to withstand the forces imposed upon it by an airbag fitted within the airbag housing.

DE 37 20 487 C1 describes a hydraulic expansion device with a plurality of individual expansion elements which are secured together adjacent one another to form a rigid unit.

US 5,752,311 discloses an apparatus with a bladder to expand tubular members. The bladder is flexible about its longitudinal axis, with a mandrel inside including a plurality of segments interconnected by ball-and-socket joints.

It is a problem with known transverse beam arrangements that they are difficult and expensive to manufacture.

In accordance with the present invention according to claim 1 there is provided an apparatus for securing components upon a hollow structural member, the apparatus comprising a pipe arrangement and a bladder, said pipe arrangement being configured to deliver fluid pressure to said bladder and said bladder being adjustable upon said pipe arrangement to allow entry in use, to a hollow structural member with that member associated with a component thereabout, said bladder being thus arranged to allow location adjacent to said member an d to expand under said fluid pressure to locally deform the hollow structural member into interference fastening with the component, wherein the pipe arrangement comprises a plurality of pipe sections with a bladder In between, wherein at least one of the pipe sections is made up of a flexible tubing in order to facilitate entry of the apparatus into the hollow structural member and the flexible tubing being not or only marginally inflatable.

The pipe arrangement could include an aperture to allow transfer of fluid pressure to the bladder.

Each bladder could be made from a bubble of plastics material. Furthermore, in order to maximise radial expansion, lateral expansion of the bladder could be inhibited with retainer discs at either end of the bladder.

With a pipe arrangement formed from flexible tube, it will be appreciated that the bladder could normally constrict the tube whilst the tube under fluid pressure is expanded to remove that constriction in order to expand the bladder and so deform the hollow structural member.

The bladder could include a spigot member in order to penetratively engage the pipe arrangement to facilitate fluid coupling to the bladder and so expansion under fluid pressure.

The bladder may include a magnetic marker in order to determine its location within the hollow structural member.

The invention will now be described by way of example with reference to the accompanying drawing of which:-
Figure 1 is a pictorial representation of a first example of a structural member;
Figure 2 is a cross-section along the line X-X on Figure 1;
Figure 3 is a pictorial representation showing a second example of a structural member;
Figure 4 is a pictorial representation of a combined steering column and fixing bracket in a pre-machine state;
Figure 5 is a pictorial side elevation of an airbag housing secured to a structural member through a housing bracket;
Figure 6 is a cross-section of a portion of the present apparatus for securing components upon a structural member; and
Figure 7 is a pictorial representation of such apparatus.

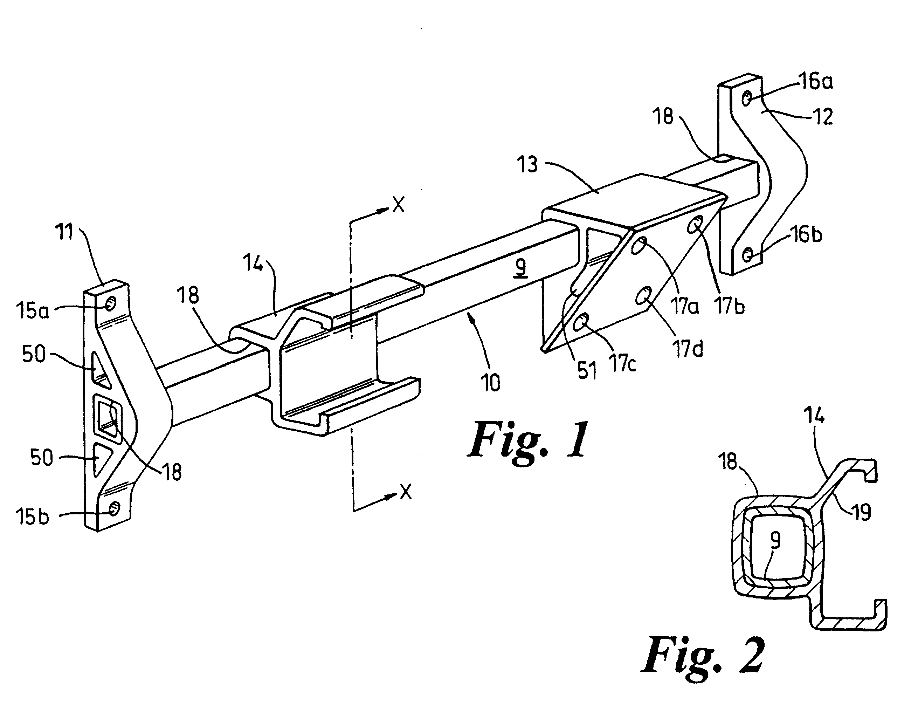

In order to understand the context in which the present apparatus is used, Figures 1 to 5 illustrate two examples of a structural member and the manner by which components are secured to that member.

With reference to Figures 1 and 2 there is shown a structural member 10 comprising of an elongate tubular member 9 upon which is engaged a pair of fixing brackets 11, 12, a steering column support bracket 13 and an airbag housing 14. In accordance with the present invention, these brackets 11, 12, 13 and housing 14 are collectively and singularly known as components. The structural member 10 forming a transverse beam assembly for mounting behind a dashboard of a motor vehicle.

The elongate tubular member 9 is made from thin wall steel tube and has a first fixing bracket 11 secured to one end and a second fixing bracket 12 secured to the opposite end. The fixing brackets 11, 12 have apertures 15A, 15B; 16A, 16B formed therein through which bolts may be passed to connect the structural member 10 to part of the structure of the motor vehicle to which the structural member 10 is fitted.

The fixing brackets 11, 12 are made from an aluminium alloy by an extrusion process such that a long length of extruded aluminium is produced having the correct outer and inner profile to form the fixing brackets. The length of extruded material is then cut into lengths equal to the width of each of the fixing brackets 11, 12. This provides a very cheap and cost effective way of manufacturing the fixing brackets 11, 12.

The steering column support bracket is made by extrusion from an aluminium alloy and has a number of threaded apertures 17A, 17B, 17C and 17D which are used to attach the steering column of the motor vehicle to which the structural member 10 is fitted.

The airbag housing 14 is made from an aluminium alloy by extrusion and has a C-shaped cavity 19 therein into which an airbag assembly can be fitted.

To manufacture the structural member 10 a tubular member 9 is selected having a predetermined length, width, height and wall thickness to provide the desired strength and deflection properties for the structural beam being produced. The components to be secured to the tubular member 9 are then located thereon each of the components having an internal aperture 18 corresponding in size and shape to that of the tubular member 9 such that they can fit thereupon with a small clearance. The fixing brackets 11, 12, the steering column support bracket 13 and the airbag support housing 14 are then, along with the tubular member 9, placed in a positioning jig to ensure the correct spacing and orientation is achieved.

The tubular member 9 it is caused to plastically deform causing expansion which results in the tubular member 9 becoming an interference fit with the components 11, 12, 13 and 14 fitted thereupon. In addition if the pressure is increased sufficiently the tubular member 9 will be caused to bulge slightly on either side of each of the components causing them to be both axially and longitudinally secured to the tubular member 9.

The pressure within the tubular member 9 is then released but because of the plastic deformation that has been caused the tubular member 9 remains in an interference fit condition with respect to the components 11, 12, 13, 14 such that the components are subjected to a slight tension by the inter-engagement and the tubular member 9 is subject to a small compression loading due to the inter-engagement.

Such deformation by pressurisation is often referred to as hydroforming.

It will therefore be appreciated that components of dissimilar materials have been secured together in a simple and cost effective manner without requiring welding or adhesive bonding.

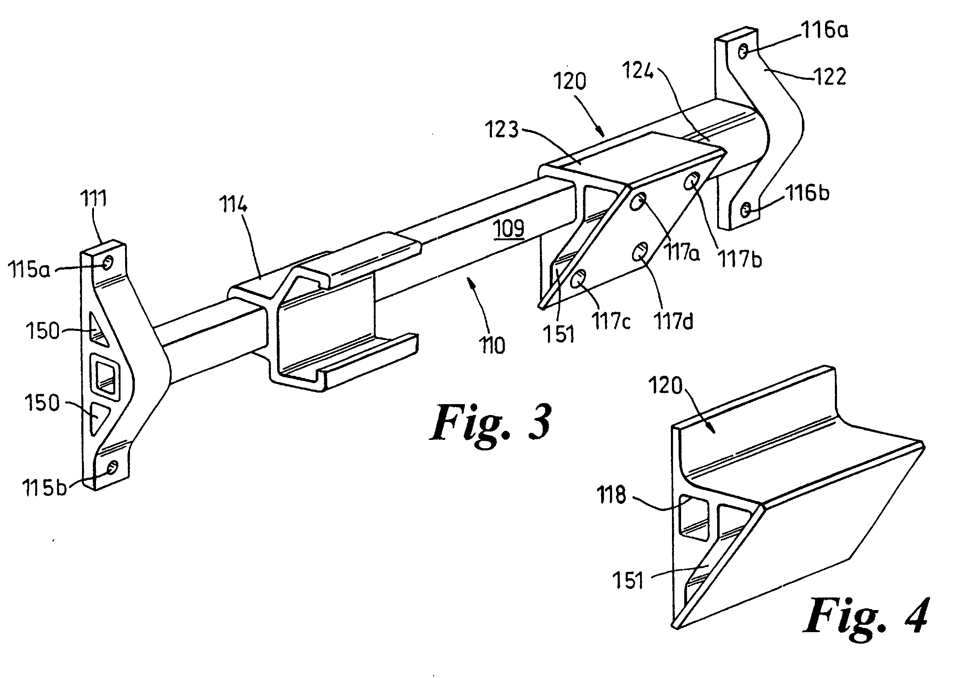

With reference to Figs.3 and 4 there is shown a structural member 110 which is in many respects the same as the structural member previously described and for which common parts are given the same reference numeral with the addition of 100.

The structural member 110 comprises of an elongate tubular member 109 upon which is engaged a number of components 111, 114 and 120. The components 111, 114 and 120 are secured to the tube in the same way as that previously described that is to say the tubular member 109 is plastically deformed so as to secure the components 111, 114 and 120 to it.

The first fixing bracket 111 is as previously described and has two fixing holes 115A and 115B used to secure the fixing bracket to part of the body structure of the motor vehicle.

The airbag housing 114 is identical to that described with reference to Figure 1.

The second fixing member 112 and the steering column support member 123 are different from that previously described in that they are made as a one piece assembly 120 from a single aluminium extrusion. The extrusion is so formed that after machining it can provide not only the steering column support 123 but also the fixing bracket 122 there being a bridging component 124 formed as an integral part thereof.

As previously described the steering column support member 123 has a number of threaded apertures 117A, 117B, 117C and 117D used to secure a steering column to the support member 123 and two apertures 116A and 116B in the fixing bracket 122 used to secure the fixing bracket to part of the body structure of the motor vehicle.

By combining the fixing bracket 122 with the steering column support member 123 the torsional rigidity of the steering column member 123 relative to the fixing bracket 122 is increased. In addition by using a single aluminium extrusion which can be conveniently machined to provide both components both the accuracy of manufacture and the cost of manufacture are reduced.

It will be appreciated that although the invention has been described with respect to components made from extruded aluminium it could be used to attach components made from other non-ferrous materials or other materials such as reinforced plastic or be made by a different method. For example components could be made from magnesium alloy or from moulded a carbon fibre reinforced composite material and the tube could be made from an aluminium alloy.

In addition it will be appreciated that the airbag housing 14, 114 could be formed as a one piece member with one of the fixing brackets in a similar manner to that in which the steering column member 123 has been formed as a one piece member with the fixing bracket 122.

It will also be appreciated that more than one airbag housing 14, 114 could be supported by a single tubular member 9, 109.

Those skilled in the art will appreciate that the high deformation pressures involved with providing the interference fit in accordance with the above method can create rupture, burst or cracking problems if there is not adequate support for the various components or these components have insufficient strength to resist such deformation. Thus, for example, cavities 50, 51; 150, 151 depicted in the drawings have at least one thin wall which may be burst due to the pressures presented in the member 9; 109, particularly if there are already existing material defects such as cracks, etc. In order to relieve this problem, these cavities can be removed or filled such as depicted in the drawings with regard to brackets 12 and 122. However, normally it will be appreciated that the whole assembly including structural member 10 or 110 will be held within an enveloping tool in order to limit pressure induced deformation and so the potential for bursting/cracking.

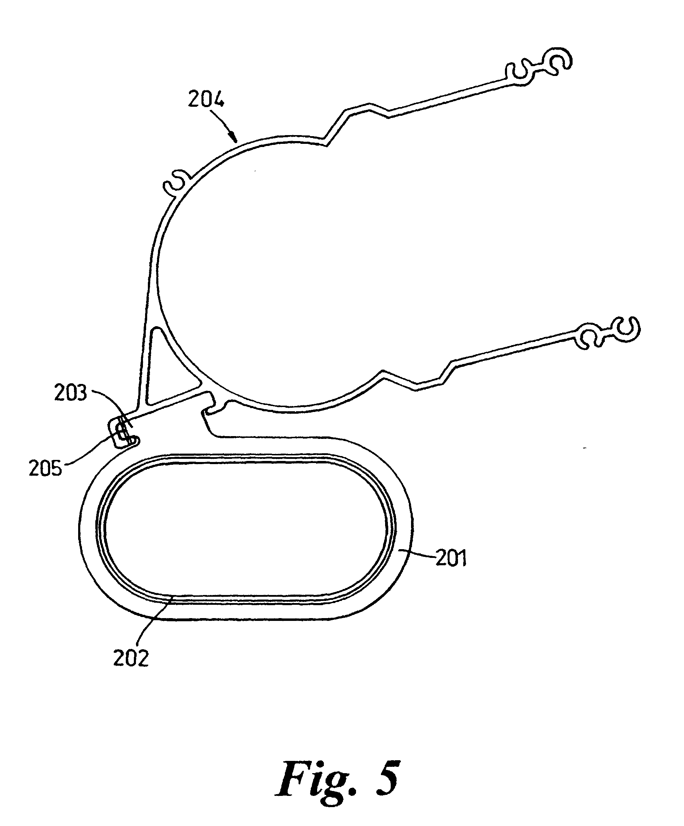

Unfortunately, with an enveloping tool it will be appreciated that relatively large retrenching or complex components, such as an airbag housing, may be difficult to accommodate both technically to provide support and in terms of acceptable tool cost. Thus, it will be appreciated and as depicted in Figure 5, that it is preferable to provide a housing bracket 201 of less complex profile and secured to an elongate member 202. The bracket 201 is secured to the elongate member 202 by an interference fit in accordance with the above-mentioned description.

The housing bracket includes a key rail 203 upon which an airbag housing 204 is fixed subsequent to securing the bracket 201 to the member 202. The housing 204 is normally slid along the rail 203 and locked in place by a locking pin 205 or adhesive or any other appropriate technique.

It will be appreciated that the housing bracket 201 has a much reduced and less complex profile compared to the airbag housing 204. Thus, the complexity of a supportive and enveloping tool to limit interference fit deformation under pressure is reduced. In such circumstances, it will be easier and cheaper to provide an adequate tool to stop bursting or rupture of the housing bracket 201 and elongate member 202 under pressure.

As described above, the objective of the present apparatus is to secure components upon a hollow structural member. It will be appreciated that a typical technique in order to secure components upon such a hollow member and as referred to as hydroforming, is through inflation of the whole hollow structural member. It will be appreciated that such inflation is inconvenient due to the relatively large volume of liquid to be pressurised and the inability to create localised differentials in the inflation pressure as required for specific components to be secured.

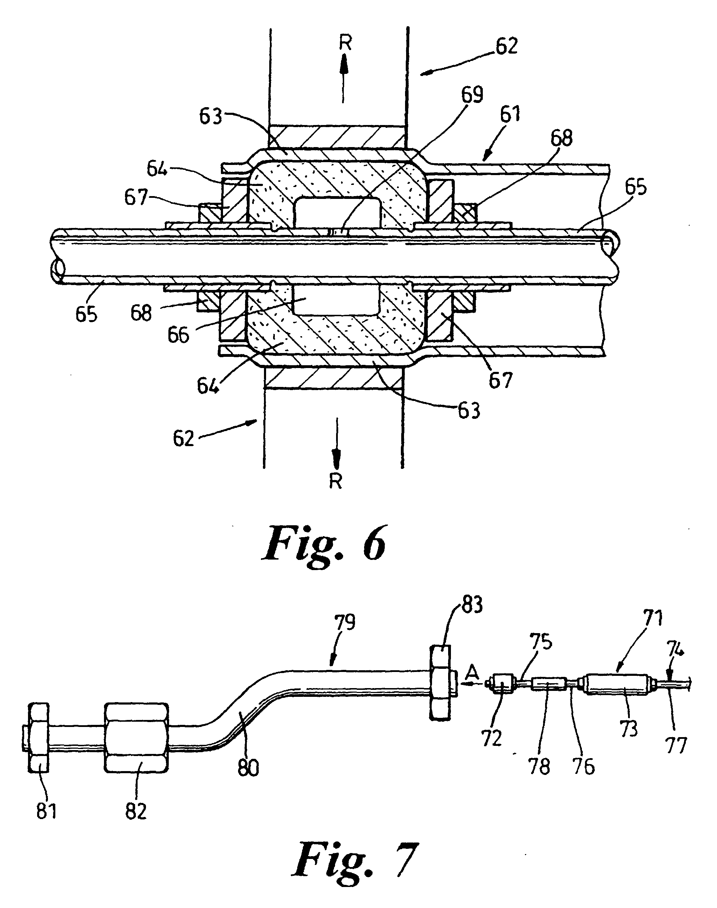

In Figure 6 a cross-section of a portion of an apparatus in accordance with the present invention is depicted. Thus, a hollow structural member 61 is secured to a component 62 through an interference fit deformation 63 precipitated by a bladder 64 of the apparatus. This bladder 64 may be formed from a hollow polyurethane or similar material bubble.

The bladder 64 is secured upon a pipe arrangement 65 which presents a fluid pressure internally of that bladder 64 in order to radially expand it in the direction of arrow heads R. Such radial expansion in the direction of arrow heads R precipitates the deformation and therefore interference fit coupling between the structural member 61 and component 62. Thus, and typically, the pipe 65 is filled with a fluid and this fluid enters a cavity 66 of the bladder 64 in order to inflate that bladder 64. It will be appreciated that retainer discs 67 are located either side of the bladder 64 in order to inhibit lateral deformation of the bladder 64 and maximise radial expansion for fluid pressure. The retainer discs 67 are robustly secured to the pipe 64 through appropriate fastening elements such as a screw thread and nut 68.

It will be appreciated by those skilled in the art that a first advantage of the present apparatus is that the volume of fluid necessary in order to create the interference fit deformation for coupling between the member 61 and the components 62 is reduced from the hollow volume of the member 61 to the volume of the pipe 65 and each bladder 64 located thereon. It will be appreciated that typically a plurality of bladders 64 will be secured upon the same pipe arrangement 65 in order to secure several components 62 to the structural member 61 in a single operation.

Where several bladders 64 are to be secured upon the same pipe arrangement 65, it will be appreciated that consideration must be made with regard to appropriate location of the bladder 64 beneath its respective component 62. Thus, sections of pipe 65 can be cut to the appropriate length of positioning in the member 61 and a bladder arrangement secured in between such sections in order to achieve appropriate location for deformation of the member 61 to couple an interference fit of the component 62 thereat. The pipe arrangement 65 will be made up of flexible tubing in order to facilitate such location. However, it will also be understood that this flexible tubing should itself should not or only marginally inflate under fluid pressure in order that there is no reduction in such fluid pressure along the length of the pipe arrangement 65 with the resultant reduction in the fluid pressure presented at each bladder 64.

It will be appreciated that typically the fluid pressurisation mechanism will be located at one end of the pipe arrangement 65 whilst the other end is closed. Thus, it is important that the inherent reduction in fluid pressure along the length of the pipe arrangement 65, i.e. due to fluid compressibility, does not adversely effect the deformation response of each bladder 64. In such circumstances, adaptation of the fluid pressure presented through the bladder 64 to the member 61 may be adjusted. Such adjustment may be made through allowing varying degrees of lateral deformation by adjusting the retainer discs 67 or through provision of a regulator valve or differences in the bladder 64 constriction in terms of material thickness and time.

From the above, it will be appreciated that differences in the degree of radial deformation precipitated by the fluid pressure presented within each bladder 64 can be altered. Thus, the present apparatus allows localised deformation response at the specific locations along the arrangement 61. In such circumstances, consideration can be made of the delicacy of each component 62 to be secured to the member 61 and the degree of radial deformation to achieve a desired interference fit coupling between that component 62 and the member 61 can be made. It will be appreciated that the component 62 which may be secured to the structural member 61 can vary from relatively robust bracketing to more delicate or intricate elements. Excessive deformation of such delicate intricate elements could precipitate cracking which is unacceptable. For example, if a ceramic component 62 were to be secured to the member 61, it will be appreciated that the nature of the material would require careful consideration of the imposed deformation precipitated by the bladder 64.

The pipe arrangement 65 could include sections which through appropriate pressure of valves into a reservoir section or sections would allow equalisation of pressure along the pipe arrangement 65.

In Figure 7 a schematic pictorial representation of an apparatus 71 in accordance with the present invention is depicted. Thus. the apparatus 71 comprises a first bladder 72 and a second bladder 73 secured together through a pipe arrangement 74. This pipe arrangement 74 comprises pipe sections 75, 76, 77 along with a flexible pipe section 78. It will be appreciated that the apparatus 71 comprises a closed fluid system such that upon presentation of a fluid pressure from an appropriate source, the bladders 72, 73 are radially expansive. These bladders 72, 73 operate in a similar manner to that described with regard to bladder 64 in Figure 6 above.

In use, the apparatus 71 enters a structural member 79 in the direction of arrow head A. Such entry and traversal of a bend 80 in the member 79 is facilitated by inclusion of the flexible section 78. Entry of the apparatus 71 into the members 79 is progressed until respective bladders 72, 73 are located about and substantially below respective components 81, 82. Such location is achieved through consideration of the distance between the bladder 72, 73 in terms of a combination of pipe sections 75, 76 and flexible section 78. A further component 83 is secured to the member 79 through an additional bladder secured to the pipe arrangement 74 but not shown.

Upon application of a fluid pressure, the bladder 72, 73 expands in order to locally deform the member 79 into interference engagement with each component 81, 82 such that they are secured to that member 79.

As indicated in Figure 6, typically the pipe arrangement 65 will include an aperture 69 through which fluid may pass in order to present the fluid pressure to the bladder 64 interior and so precipitate expansion in the direction of arrow head R. However, alternatively, it will be appreciated that each bladder could be configured as a closed doughnut about a flexible pipe arrangement 65. This doughnut could be filled with a transmission fluid such that pressure applied through the pipe 65 is transferred to the bladder 64 through that transmission fluid. Normally, this doughnut configuration of the bladder 64 would naturally constrict the pipe arrangement 65 or flexible tube such that upon application of the fluid pressure, this constriction is relieved in order to expand that bladder 64. Alternatively, each bladder could include spigot means to precipitate a passage into a pipe arrangement 64. where required. Thus, a length of pipe 65 would be acquired and passed through a bladder to an appropriate distance equivalent to the location of the desired component upon the member 61 at which point the bladder would be compressed possibly by a percussive force such that a spigot spear member in the bladder would penetrate the pipe 65 and so provide a passage to that bladder. The bladder subsequently being further secured at that location upon the pipe 64 through retainer discs and fastener means described previously.

It will be appreciated that location of the bladder in accordance with the present apparatus is important in order to ensure localised deformation of the structural member coincides with the component position. As indicated above, one manner of achieving such appropriate location for the bladder is through prior measurement of the distance of bladder spacing upon the pipe arrangement 65 from an entry point to the structural member. Clearly, such an arrangement may be inconvenient. Thus, it will be appreciated that a magnetic or other marker type could be secured to the bladder. Thus, provided the magnetic field was of a sufficient strength, the location of the bladder within the hollow structural member could be determined. Such a magnetic marker may be of a permanent type or produce a magnetic field through an electromagnetic effect. A further benefit of such a magnetic marker may be that sufficient magnetic attraction may be achieved between the bladder and a magnetically inducible component in order to temporarily locate that component prior to more permanent securing deformation of the structural member into interference engagement with the component.

Those skilled in the art will appreciate that in accordance with the present invention several components as multiple layers can be secured together in a single operation or assembly. Thus, for example, there could be a combination comprising a beam, a sleeve of film i.e. galvanic barrier, plastic coating etc. and an extruded bracket all brought into interference engagement.

In addition to being a facia beam as described in the above embodiment, it will be appreciated that the invention also relates to a roll-over cage assembies, struts or suspension tie bars etc. Furthermore the beam could be sleeved in plastic to eliminate the need for separate paint finishes etc.

In addition to extruded components , as described above, it will be appreciated that die castings, mouldings and machined components can be secured to the beam provided such components can withstand the mechanical stresses and strains imposed by interference engagement expansion.

## Claims

1. An apparatus (71) for securing components upon a hollow structural member (9; 109), the apparatus (71) comprising a pipe arrangement (65; 74) and a bladder (64; 72, 73), said pipe arrangement (65; 74) being configured to deliver fluid pressure to said bladder (64; 72, 73) and said bladder (64; 72, 73) being adjustable upon said pipe arrangement (65; 74) to allow entry in use, to a hollow structural member (9; 109) with that member associated with a component thereabout, said bladder (64; 72, 73) being thus arranged to allow location adjacent to said member (9; 109) and to expand under said fluid pressure to locally deform the hollow structural member (9; 109) into interference fastening with the component,
wherein the pipe arrangement (65; 74) comprises a plurality of pipe sections with a bladder in between, **characterized in that** at least one of the pipe sections (78) is made up of a flexible tubing in order to facilitate entry of the apparatus (71) into the hollow structural member (9; 109) and the flexible tubing being not or only marginally inflatable.

2. An apparatus as claimed in claim 1,
wherein the bladder (64) is associated with retainer discs (67) and fastener means (68) in order to inhibit lateral deformation of the bladder (64) under fluid pressure.

3. An apparatus as claimed in Claim 1 or 2,
wherein the fluid pressure is delivered from the pipe arrangement (65) to the bladder (64) through an aperture (69) in the pipe arrangement (65) coupled to a cavity in the bladder (64).

4. An apparatus as claimed in any preceding claim,
wherein the bladder (64) comprises a balloon of plastics material.

5. An apparatus as claimed in Claim 4,
wherein the plastics material is polyurethane or similar material.

6. An apparatus as claimed in any preceding claim,
wherein the bladder (64) in a normal state presents a constriction to the pipe arrangement and said constriction is relieved by the fluid pressure in order to expand the bladder (64) and so deform the hollow structural member (9; 109).

7. An apparatus as claimed in any of Claims 1 to 5,
wherein the bladder (64) includes spigot means arranged to penetrate the pipe arrangement under percussive pressure in order to facilitate delivery of fluid pressure from that pipe arrangement to the bladder (64).

8. An apparatus as claimed in any preceding claim,
wherein the bladder is associated with a magnetic marker means in order to facilitate location of the bladder within a hollow structural member.

## Patentansprüche

1. Vorrichtung (71) zur Befestigung von Bauteilen auf einem hohlen Konstruktionselement (9; 109), wobei die Vorrichtung (71) eine Rohranordnung (65; 74) und einen Blasenkörper (64; 72, 73) umfasst, wobei die Rohranordnung (65; 74) so konfiguriert ist, dass sie dem Blasenkörper (64; 72, 73) Fluiddruck zuführt, und der Blasenkörper (64; 72, 73) auf der Rohranordnung (65; 74) verstellbar ist, um im Gebrauch Eintritt zu einem hohlen Konstruktionselement (9; 109) zu gestatten, wobei das Element einem sich darum herum befindenden Bauteil zugeordnet ist, wobei der Blasenkörper (64; 72, 73) somit so angeordnet ist, dass er eine Anordnung neben dem Element (9; 109) gestattet und sich unter dem Fluiddruck aufweitet, um das hohle Konstruktionselement (9; 109) zu einer Presspassungsbefestigung am Bauteil lokal zu verformen,
wobei die Rohranordnung (65; 74) mehrere Rohrabschnitte mit einem Blasenkörper dazwischen umfasst, **dadurch gekennzeichnet, dass** mindestens einer der Rohrabschnitte (78) aus einer flexiblen Rohrleitung besteht, um den Eintritt der Vorrichtung (71) in das hohle Konstruktionselement (9; 109) zu erleichtern, wobei die flexible Rohrleitung nicht oder nur geringfügig aufblasbar ist.

2. Vorrichtung nach Anspruch 1,
bei der dem Blasenkörper (64) Haltescheiben (67) und Befestigungsmitteln (68) zugeordnet sind, um eine seitliche Verformung des Blasenkörpers (64) unter Fluiddruck zu verhindern.

3. Vorrichtung nach Anspruch 1 oder 2,
bei der der Fluiddruck dem Blasenkörper (64) von der Rohranordnung (65) durch eine an einen Hohlraum im Blasenkörper (64) gekoppelte Öffnung (69) in der Rohranordnung (65) zugeführt wird.

4. Vorrichtung nach einem der vorhergehenden Ansprüche,
bei der der Blasenkörper (64) einen Ballon aus Kunststoffmaterial umfasst.

5. Vorrichtung nach Anspruch 4,
bei der es sich bei dem Kunststoffmaterial um Polyurethan oder um ein ähnliches Material handelt.

6. Vorrichtung nach einem der vorhergehenden Ansprüche,
bei der der Blasenkörper (64) in einem Normalzustand die Rohranordnung mit einer Einschnürung versieht und die Einschnürung durch den Fluiddruck beseitigt wird, um den Blasenkörper (64) aufzuweiten und so das hohle Konstruktionselement (9; 109) zu verformen.

7. Vorrichtung nach einem der Ansprüche 1 bis 5,
bei der der Blasenkörper (64) ein Zapfenmittel enthält, das so angeordnet ist, dass es die Rohranordnung unter Stoßdruck durchdringt, um die Zuführung von Fluiddruck von der Rohranordnung zum Blasenkörper (64) zu erleichtern.

8. Vorrichtung nach einem der vorhergehenden Ansprüche,
bei der der Blasenkörper einem magnetischen Markierungsmittel zugeordnet ist, um die Anordnung des Blasenkörpers im hohlen Konstruktionselement zu erleichtern.

## Revendications

1. Disposition (71) de fixation de composants sur un élément de structure creux (9 ; 109), ce dispositif (71) comprenant une disposition de tuyau (65 ; 74) et une vessie (64 ; 72, 73), cette disposition de tuyau (65 ; 74) étant configurée pour délivrer du fluide sous pression à la vessie (64 ; 72, 73) et cette vessie (64 ; 72, 73) étant réglable sur la disposition de tuyau (65 ; 74) pour permettre l'entrée, en cours d'utilisation, sur un élément de structure creux (9 ; 109) de façon que cet élément soit associé à un composant placé autour de celui-ci, la vessie (64 ; 72, 73) étant ainsi disposée pour pouvoir se positionner au voisinage de l'élément (9, ; 109) et pour se dilater sous la pression de fluide de manière à déformer localement l'élément de structure creux (9 ; 109) dans un emboîtement en force avec le composant, la disposition de tuyau (65 ; 74) comprenant un certain nombre de sections de tuyau avec une vessie entre elles,
**caractérisé en ce que**
l'une au moins des sections de tuyau (78) est constituée d'un tube flexible pour faciliter l'entrée du dispositif (71) dans l'élément de structure creux (9 ; 109), et le tube flexible n'étant pas gonflable ou n'étant gonflable que marginalement.

2. Dispositif selon la revendication 1,
dans lequel
la vessie (64) est associée à des disques de retenue (67) et à des moyens de fixation (68) pour empêcher une déformation latérale de la vessie (64) sous la pression de fluide.

3. Dispositif selon la revendication 1 ou 2,
dans lequel
la pression de fluide est délivrée par la disposition de tuyaux (65) à la vessie (64) en passant par une ouverture (69) de la disposition de tuyaux (65) couplée à une cavité dans la vessie (64).

4. Dispositif selon l'une quelconque des revendications précédentes,
dans lequel
la vessie (64) consiste en un ballon de matière plastique.

5. Dispositif selon la revendication 4,
dans lequel
la matière plastique est du polyuréthanne ou autre matériau analogue.

6. Dispositif selon l'une quelconque des revendications précédentes,
dans lequel
la vessie (64), dans un état normal, présente un resserrement sur la disposition de tuyau, et ce resserrement est libéré par la pression de fluide pour permettre à la vessie (64) de se dilater et de déformer ainsi l'élément de structure creux (9 ; 109).

7. Dispositif selon l'une quelconque des revendications 1 à 5,
dans lequel
la vessie (64) comprend des moyens de broche disposés pour pénétrer dans la disposition de tuyau sous l'effet d'une pression de percussion, de manière à faciliter la distribution du fluide sous pression provenant de cette disposition de tuyau, vers la vessie (64).

8. Dispositif selon l'une quelconque des revendications précédentes,
dans lequel
la vessie est associée à des moyens de marqueur magnétique pour faciliter le positionnement de la vessie à l'intérieur d'un élément de structure creux.
